# EUROPEAN PATENT SPECIFICATION

(11) **EP 0 933 578 B1**
(45) Date of publication and mention of the grant of the patent: **12.03.2008**
(21) Application number: 99200227.9
(22) Date of filing: 26.01.1999
(51) Int. Cl.: F16L 33/207

(54) **A connection for high pressure fluid flexible pipes**
Verbindung für Hochdruckschläuche
Raccord pour tuyaux flexibles à haute pression

(30) Priority: 30.01.1998 IT MI980168
(43) Date of publication of application: 04.08.1999
(73) Proprietor: ALLEGRI CESARE S.p.A., I-20099 Sesto San Giovanni (MI) (IT)
(72) Inventor: Allegri, Cesare, 20099 Sesto san Giovanni (Milan) (IT); Bosio, Ernesta, 20099 Sesto san Giovanni (Milan) (IT)
(74) Representative: Martegani, Franco

(56) References cited:
- DE-A- 2 001 098
- DE-A- 2 152 737
- DE-A- 2 907 813
- GB-A- 2 220 242

## Description

The present invention refers to a connection for high pressure fluid flexible pipes.

Currently, joints or connections, which are specifically designed for high pressure conditions, are used.

Generally, these connections are formed by a pipe coupling which locks the end of the pipe to one of a pipe fitting ends, which is positioned inside the pipe, through a pressing and deformation operation due to the clamping of the parts.

An example of said connections is shown by the European patent EP-B-258 524 under this same Applicant's name, wherein this end of the metallic pipe fitting, which is positioned inside the pipe, has a conical seat and a conical relief on its outer surface.

Between the conical seat and the conical relief there is a groove wherein the end of the flexible pipe is inserted during the forced coupling between the portions through the deformation of the outer metallic sleeve which encloses both the pipe fitting end and the pipe end. To realise said coupling in a correct way the sleeve must also have a specific shaping of the outer surface.

In fact, this outer surface has a shaping with a reduced thickness zone which, by bending, is inserted between the conical seat and the conical relief of the pipe fitting end so as to firmly lock the end of the corresponding pipe.

To realise the components of such a connection, both an outer sleeve and a pipe fitting end on the pipe, provided with particular shapes which are expensive to produce, have to be realised.

Further, since it is necessary to provide these shapings, especially on the pipe fitting end, the pipe, when externally coated with plastic material, should be freed, at least on the end portion, from said coating which otherwise would obstruct the fixing operation of the connection to the pipe.

An end fitting for a very high pressure wire-reinforced hose, is disclosed in GB-A-2220242, which is pared and clamped between stem and ferrule members of the fitting.

The stem member has two longitudinally spaced shoulders which are spaced apart by a circumferential groove. The ferrule member incorporates two spaced-apart grooves which locate about and complement the stem member shoulders, and a shoulder that locates about and complements the stem member groove. The various shoulders and grooves in the two fitting members co-operate to force a projecting end of the hose reinforcement to assume a serpentine path and to positively lock the reinforcement between the two members. Additionally, the ferrule member is formed with a number of inwardly projecting circumferential ribs, each of which is surrounded by a circumferentially extending land, and the ribs and lands co-operate to effect localised concentrated clamping of the hose reinforcement when the ferrule member is swaged onto the stem member.

The swageable hose and fitting of GB 2220242 provide expressly the outer covering of the flexible hose to be removed in order to expose its metallic reinforcement to the shoulders of the internal fitting and of the ferrule member.

Document DE-A-2001098 discloses a connection, in which the outer covering of the pipe has to be removed before fitting it.

The general purpose of the present invention is to solve the above mentioned technical problems in a extremely simply, economical and functional way.

Another purpose is to realise a connection with as simple as possible components so as to lower the production costs, without lowering the performance of the connection.

Another purpose is to avoid set-up operations of the pipe end before connecting the pipes, such as the removal of the outer plastic coating, which cause working disadvantages and additional assembly costs.

To realise the above mentioned purposes, according to the present invention, a connection for high pressure fluid flexible pipes, having the characteristics shown in the attached claims.

The structural and functional characteristics of the present invention and its advantages in comparison with the known art will be clearer and more evident from the following description, referred to the attached drawings, which show an example of a connection for high pressure fluid flexible pipe realised according to the present invention.

In the drawings:
- Figure 1 shows a connection for high pressure fluid flexible pipes according to the present invention, said connection is shown half in cross section and half according to a lateral view, ready to be fixed in working position on the pipe, before being deformed by pressure;
- Figure 2 is a view equivalent to the one of figure 1 with the connection in its final deformed working position.

Referring to the drawings, the connection for high pressure fluid flexible pipes according to the present invention is indicated with numeral 10.

This connection 10 comprises essentially a metallic pipe fitting 11, a free end of a flexible pipe 12 and a metallic sleeve 13.

The pipe fitting 11 comprises, on one side, a head with a larger diameter 14 and, on the other side, an end portion 15, with reduced dimensions, which is suitable to engage with one end of the flexible pipe 12. In an intermediate zone between the two portions of the head 14 and of the ends 15, the pipe fitting has a cylindrical annular seat 16 below a radial annular final surface 27 wherein a connecting minimum annular groove 17 to the end portion 15, with a reduced dimension diameter, is obtained

This annular groove 17 is located before a slight conical relief 18 which forms the inner final portion of the pipe fitting end 15 with reduced diameter suitable to be inserted in the pipe. The reduced diameter end 15 is provided with a series of annular grooves 19.

The metallic sleeve 13 comprises an inner threaded cylindrical portion 20 connected to one portion of the cylindrical head 21 with a slightly larger outer diameter. This portion of the cylindrical head 21 ends with an inwardly directed flange 22 which defines a housing 23 to fix the end 15 of the pipe fitting 11. It has to be noted that said flange 22 extends towards the inner portion of the sleeve for a length equal or shorter than the one of the annular cylindrical seat 16, whereinto said flange will be inserted by deformation.

The flexible pipe 12 comprises an inner portion 24, made, for instance, of an olefinic polymer or of polyamide or of PTFE, or of other similar material. On this inner portion 24, a sheath comprising a metallic plait 25 is placed, which is also coated with an outer plastic material 26, as for instance nylon.

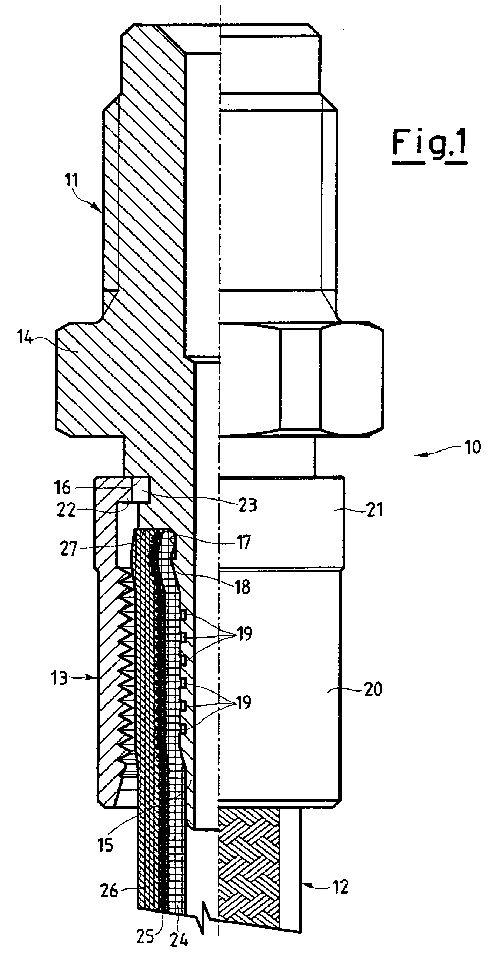

Figure 1 clearly shows how the portions must be placed before proceeding to their coupling by pressure and deformation in an specific equipment.

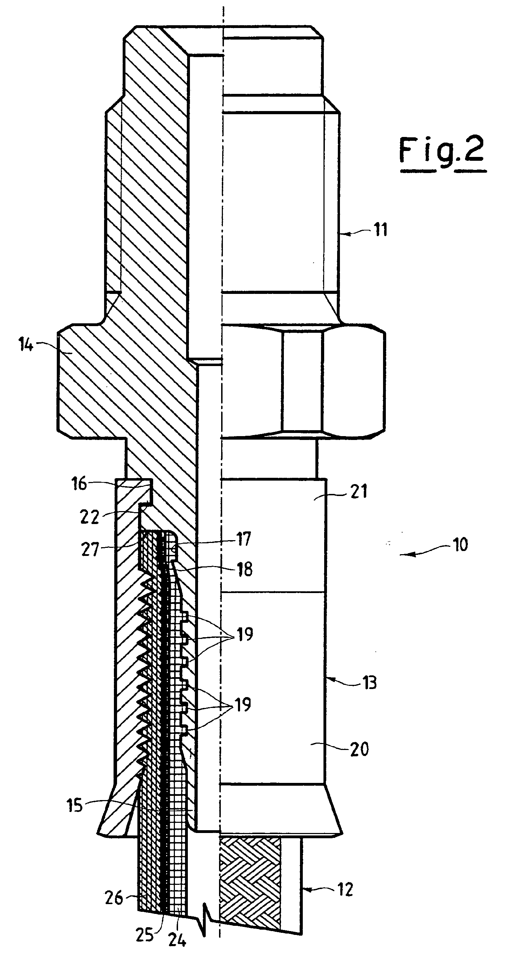

To arrive to the configuration shown in figure 2 it is necessary to proceed in the following way.

The end 15 of the pipe fitting 11 must be inserted forcedly in the inner portion 24 of the flexible pipe 12 so as that the end of the pipe 12 abuts against the annular radial wall 27.

Further, the metallic sleeve 13 is then inserted on the pipe which is inserted on the pipe fitting and the flange 22 of the cylindrical head portion 21 abuts against the end of the larger diameter head 14 of the pipe fitting 11. In this way, the annular flange 22 of the sleeve 13 is aligned with the annular cylindrical seat 16 of the pipe fitting 11.

At this point, the sleeve 13 is pressed with special radial punches so as to clamp the pipe on the pipe fitting by deformation.

Particularly, after such deformation the radial flange 22 of the sleeve 13 is fixedly inserted into the annular cylindrical seat 16 of the pipe fitting 11. Further, the inner threaded cylindrical portion 20 of the sleeve 13 penetrates into the outer plastic material 26 of the pipe 12 thus contributing more effectively to its locking on the pipe fitting.

At this point, the cylindrical head portion 21, having a slightly larger diameter and ending with a flange 22, of the sleeve disappears, and said head portion 21 is aligned with the remaining inner threaded cylindrical portion 20 of the sleeve.

A connection, almost perfectly smooth with a uniform outer diameter and with optimum sealing and strength characteristics, is obtained.

The elimination of all the special shaping and cavities provided both at the end of the pipe fitting and on the surface of the sleeve causes a greatly simplified production of such elements.

Also their assembly is consequently simplified and the pipe end is not stressed while inserting the pipe fitting end.

Such simplicity of the outer shape of the pipe fitting end allows to forcedly insert said end into the pipe.

The connection according to the present invention is particularly useful and suitable for pipes made of flexible material which are suitable to undergo cold plastic deformation so as to realise a perfectly hermetic seal.

Examples of such materials useful to pipes of this type are olefinic polymer (polyethylene and polypropylene), polyamides and polyvinyl chloride.

A further application particularly useful can be the one with PTFE (polytetrafluorethylene), thanks to the fact that it has optimal characteristics of resistance to the chemical agents and to the high temperatures.

The flexible pipe of this type can also have a metallic wire sheath suitable to give high pressure resistance and to form a curve without squashing the pipe. This metallic wire can be realised as a plait of stainless steel. The coating material of both the pipe and the metallic sheath or metallic plait can be a plastic material, e.g. nylon, as the one known as Rilsan.

Finally the pipe fitting material is preferably made of stainless steel, brass, titanium or Hastelloy, or, in any case, a material for applications wherein it comes in contact with corrosive fluids.

A pipe connection, according to the present invention, is particularly advantageous in braking systems because it complies with all the parameters required by the FMV 106 regulations (usually called DOT).

Advantageously, it can be noted that such connection is realised directly on the plastic covering or coating of the pipe without having to remove it, at least in the portion of the end comprised between the outer sleeve and the pipe fitting end.

Further, the connection of the present invention has, advantageously, a limited weight and particularly small dimensions, without any shaping and projecting portions.

It is therefore achieved the purpose indicated in the preamble of the description.

The protection of the invention is defined by the attached claims.

## Claims

1. A connection for high pressure flexible pipes comprises essentially a metallic pipe fitting (11), a free end of a flexible pipe (12) and a metallic sleeve (13), the pipe fitting (11) comprising, on one side, a head (14) with a larger diameter and, on the other side, an end portion (15), with reduced dimensions, which is engaged with one end of said flexible pipe (12), said sleeve (13) being provided to be pressed on both the pipe (12) and the fitting (11) so that it clamps them together by deformation, wherein said pipe fitting (11) comprises an annular cylindrical seat (16) in an intermediate zone between the two portions of the head (14) and of the end portion (15), a radial annular final surface (27) and a minimum annular groove (17), said sleeve (13) having a cylindrical portion with an inner thread (20) connected to a portion of a cylindrical head (21) which ends with an inwardly directed flange (22), which defines a housing (23) to lock together said sleeve (13) and said pipe fitting, said flange (22) is realised to be aligned to said cylindrical annular seat (16) of said pipe fitting (11) when the metallic sleeve (13) is inserted on the flexible pipe (12) which in turn presents the end (15) of the pipe fitting (11) inserted so that the end of the pipe (12) abuts against the annular radial wall (27) and the flange (22) of the cylindrical head portion (21) abuts against the end of the larger diameter head (14) of the pipe fitting (11), **characterised in that**, and said sleeve (13), before pressing it on the flexible pipe, presents said portion of cylindrical head (21) with an outer diameter slightly larger than said inner threaded cylindrical portion (20), and **in that** said flexible pipe (12) is coated with an outer plastic material (26), so that after the deformation of the metallic sleeve (13) the radial flange (22) of the sleeve (13) is fixedly inserted into the annular cylindrical seat (16) of the pipe fitting (11) and the outer plastic material (26) of the pipe (12) is be penetrated by the inner threaded cylindrical portion (20) of the sleeve (13).

2. A connection for flexible pipes as claimed in claim 1, **characterised in that** said flange (22) extends towards the inner portion of said sleeve (13) for a length equal or shorter than the length of said annular cylindrical seat (16).

3. A connection for flexible pipes as claimed in claim 1, **characterised in that** said reduced diameter end portion (15) presents a series of annular grooves (19).

4. A connection for flexible pipes as claimed in claim 1, **characterised in that** said flexible pipe (12) comprises an inner portion (24) made of an olefinic polymer or of polyamide or of PTFE, or of other similar material; on this inner portion (24), a sheath comprising a metallic plait (25) is placed, which is also coated with the outer plastic material (26), as nylon.

5. A connection for flexible pipes as claimed in claim 1, **characterised in that** said minimum annular groove (17) is disposed between said radial annular surface (27) at the end of said larger diameter head (14) and said plurality of annular grooves (19) at one reduced diameter end (15) of said pipe fitting (11).

6. A connection for flexible pipes as claimed in claim 5, **characterised in that** it comprises a slight conical relief (18) positioned on the end portion cf said plurality of annular grooves (19).

7. A connection for flexible pipes as claimed in claim 1, **characterised in that** said reduced diameter end (15) of said pipe fitting (11) is forcedly inserted into said free end of said flexible pipe (12).

## Patentansprüche

1. Verbindungseinrichtung für flexible bzw. elastische Hochdruckleitungen bzw. -rohre, die im Wesentlichen einen Metallfitting bzw. ein Metallrohrformstück (11), ein freies Ende einer flexiblen bzw. elastischen Leitung bzw. eines flexiblen bzw. elastischen Rohres (12) und eine Metallhülse bzw. Metallbuchse (13) aufweist, wobei der Fitting bzw. das Rohrformstück (11) Folgendes aufweist: auf einer Seite einen Kopf (14) mit einem größeren Durchmesser und auf der anderen Seite einen Endabschnitt (15) mit reduzierten bzw. verjüngten Dimensionen bzw. Abmessungen, welcher mit einem Ende der flexiblen bzw. elastischen Leitung bzw. des flexiblen bzw. elastischen Rohres (12) im Eingriff ist, wobei die Hülse bzw. Buchse (13) vorgesehen ist, um sowohl auf die Leitung bzw. das Rohr (12) als auch auf den Fitting bzw. das Rohrformstück (11) gepresst zu werden, so dass sie sie durch Verformung zusammen festklammert bzw. festklemmt, wobei der Fitting bzw. das Rohrformstück (11) Folgendes aufweist: einen ringförmigen zylindrischen Sitz (16) in einer dazwischen liegenden Zone bzw. Zwischenzone zwischen den beiden Abschnitten des Kopfes (14) und des Endabschnittes (15), eine radiale ringförmige Endoberfläche (27) und eine minimale ringförmige Nut (17), wobei die Hülse bzw. Buchse (13) einen zylindrischen Abschnitt mit einem Innengewinde (20) hat, der mit einem Abschnitt eines zylindrischen Kopfes (21) verbunden ist, welcher mit einem nach innen gerichteten bzw. angeordneten Flansch (22) endet, welcher ein Gehäuse (23) definiert, um die Hülse bzw. Buchse (13) und den Fitting bzw. das Rohrformstück zusammen zu verriegeln bzw. zu verrasten, wobei der Flansch (22) realisiert bzw. verwirklicht wird, um an dem zylindrischen ringförmigen Sitz (16) des Fittings bzw. Rohrformstücks (11) ausgerichtet zu sein, wenn die Metallhülse bzw. Metallbuchse (13) auf der flexiblen bzw. elastischen Leitung bzw. dem flexiblen bzw. elastischen Rohr (12) eingesetzt bzw. eingefügt ist, welche dann wieder das Ende (15) des Fittings bzw. des Rohrformstücks (11) präsentiert bzw. darstellt, der bzw. das so eingesetzt bzw. eingefügt wird, dass das Ende der Leitung bzw. des Rohres (12) gegen die ringförmige radiale Wand (27) angrenzt und wobei der Flansch (22) des zylindrischen Kopfabschnittes (21) gegen das Ende des Kopfes (14) mit größerem Durchmesser des Fittings bzw. des Rohrformstückes (11) angrenzt, **dadurch gekennzeichnet, dass** die Hülse bzw. Buchse (13), bevor sie auf die flexible bzw. elastische Leitung bzw. das flexible bzw. elastische Rohr gepresst wird, den Abschnitt des zylindrischen Kopfes (21) präsentiert bzw. darstellt, und zwar mit einem äußeren Durchmesser, der geringfügig größer ist als der mit Innengewinde versehene zylindrische Abschnitt (20), und dass die flexible bzw. elastische Leitung bzw. das flexible bzw. elastische Rohr (13) mit einem äußeren Kunststoffmaterial (26) beschichtet ist, so dass nach der Verformung der Metallhülse bzw. Metallbuchse (13) der radiale Flansch (22) der Hülse bzw. Buchse (13) starr bzw. fest in den ringförmigen zylindrischen Sitz (16) des Fittings bzw. des Rohrformstücks (11) eingesetzt bzw. eingefügt ist und das äußere Kunststoffmaterial (26) der Leitung bzw. des Rohres (12) durch den mit Innengewinde versehenen zylindrischen Abschnitt (20) der Hülse bzw. Buchse (13) durchdrungen ist.

2. Verbindungseinrichtung für flexible bzw. elastische Leitungen bzw. Rohre wie in Anspruch 1 beansprucht, **dadurch gekennzeichnet, dass** sich der Flansch (22) in Richtung des inneren Abschnittes der Hülse bzw. Buchse (13) für eine Länge erstreckt, die gleich oder kürzer als die Länge des ringförmigen zylindrischen Sitzes (16) ist.

3. Verbindungseinrichtung für flexible bzw. elastische Leitungen bzw. Rohre wie in Anspruch 1 beansprucht, **dadurch gekennzeichnet, dass** der reduzierte bzw. verjüngte Durchmesserendabschnitt (15) eine Serie von ringförmigen Nuten (19) präsentiert bzw. darstellt.

4. Verbindungseinrichtung für flexible bzw. elastische Leitungen bzw. Rohre wie in Anspruch 1 beansprucht, **dadurch gekennzeichnet, dass** die flexible bzw. elastische Leitung bzw. das flexible bzw. elastische Rohr (12) einen inneren Abschnitt (24) aufweist, der aus einem olefinischen Polymer oder aus Polyamid oder aus PTFE oder aus anderem ähnlichen Material hergestellt ist, wobei auf diesem inneren Abschnitt (24) eine Umhüllung bzw. ein Mantel angeordnet ist, der ein Metallgeflecht (25) aufweist, welches ebenfalls mit dem äußeren Kunststoffmaterial (26), wie Nylon, beschichtet ist.

5. Verbindungseinrichtung für flexible bzw. elastische Leitungen bzw. Rohre wie in Anspruch 1 beansprucht, **dadurch gekennzeichnet, dass** die minimale ringförmige Nut (17) zwischen der radialen ringförmigen Oberfläche (27) an dem Ende des Kopfes (14) mit größerem Durchmesser und der Vielzahl von ringförmigen Nuten (19) an einem reduzierten bzw. verjüngten Durchmesserende (15) des Fittings bzw. des Rohrformstückes (11) angeordnet ist.

6. Verbindungseinrichtung für flexible bzw. elastische Leitungen bzw. Rohre wie in Anspruch 5 beansprucht, **dadurch gekennzeichnet, dass** sie ein geringfügig konisches Relief bzw. Hinterschliff (18) aufweist, das bzw. der auf dem Endabschnitt der Vielzahl von ringförmigen Nuten (19) positioniert ist.

7. Verbindungseinrichtung für flexible bzw. elastische Leitungen bzw. Rohre wie in Anspruch 1 beansprucht, **dadurch gekennzeichnet, dass** das reduzierte bzw. verjüngte Durchmesserende (15) des Fittings bzw. Rohrformstückes (11) erzwungen bzw. zwangsweise in das freie Ende der flexiblen bzw. elastischen Leitung bzw. des flexiblen bzw. elastischen Rohres (12) eingesetzt bzw. eingefügt ist.

## Revendications

1. Raccord pour tuyaux flexibles à haute pression, englobant pour l'essentiel un embout tubulaire métallique de raccordement (11), une extrémité libre d'un tuyau flexible (12) et une douille métallique (13), l'embout tubulaire de raccordement (11) comprenant, sur l'un des côtés, une tête (14) de diamètre supérieur et, sur l'autre côté, une partie d'extrémité (15) de dimensions réduites qui est en prise avec l'une des extrémités dudit tuyau flexible (12), ladite douille (13) étant conçue pour être pressée tant sur le tuyau (12), que sur l'embout de raccordement (11), de manière à les bloquer ensemble par déformation, sachant que ledit embout tubulaire de raccordement (11) comprend un siège annulaire cylindrique (16) situé dans une zone intermédiaire entre les deux régions de la tête (14) et de la partie d'extrémité (15), une surface extrême annulaire radiale (27) et au moins une rainure annulaire (17), ladite douille (13) comportant une région cylindrique à filetage intérieur (20), reliée à une région d'une tête cylindrique (21) qui s'achève par une collerette (22) dirigée vers l'intérieur, définissant un logement (23) affecté au verrouillage conjoint de ladite douille (13) et dudit embout tubulaire de raccordement, ladite collerette (22) étant réalisée pour être alignée avec ledit siège annulaire cylindrique (16) dudit embout tubulaire de raccordement (11) lorsque la douille métallique (13) est mise en place sur le tuyau flexible (12) qui présente, à son tour, l'extrémité (15) de l'embout tubulaire de raccordement (11) insérée de façon telle que l'extrémité du tuyau (12) soit en butée contre la paroi radiale annulaire (27), et que la collerette (22) de la partie frontale cylindrique (21) soit en butée contre l'extrémité de la tête (14) de l'embout tubulaire de raccordement (11) qui est munie du diamètre supérieur, **caractérisé par le fait que**, avant d'être pressée sur le tuyau flexible, ladite douille (13) présente ladite partie frontale cylindrique (21) offrant un diamètre extérieur légèrement supérieur à celui de ladite région cylindrique intérieure taraudée (20) ; et **par le fait que** ledit tuyau flexible (12) est revêtu d'une matière plastique extérieure (26), de telle sorte que, à l'issue de la déformation de la douille cylindrique (13), la collerette radiale (22) de ladite douille (13) soit insérée rigidement dans le siège annulaire cylindrique (16) de l'embout tubulaire de raccordement (11), et que la région cylindrique intérieure taraudée (20) de la douille (13) pénètre dans la matière plastique extérieure (26) du tuyau (12).

2. Raccord pour tuyaux flexibles, selon la revendication 1, **caractérisé par le fait que** ladite collerette (22) s'étend en direction de la région intérieure de ladite douille (13), selon une longueur égale ou inférieure à la longueur dudit siège annulaire cylindrique (16).

3. Raccord pour tuyaux flexibles, selon la revendication 1, **caractérisé par le fait que** ladite partie d'extrémité (15), de diamètre réduit, présente une série d'encoches annulaires (19).

4. Raccord pour tuyaux flexibles, selon la revendication 1, **caractérisé par le fait que** ledit tuyau flexible (12) comprend une partie intérieure (24) fabriquée en un polymère oléfinique, en un polyamide ou en PTFE, voire en un autre matériau similaire ; partie intérieure (24) sur laquelle se trouve une gaine dotée d'un tressage métallique (25), qui est également revêtue de la matière plastique extérieure (26) telle que du Nylon.

5. Raccord pour tuyaux flexibles, selon la revendication 1, **caractérisé par le fait que** ladite rainure annulaire (17), prévue au minimum, est disposée à l'extrémité de ladite tête (14) de diamètre supérieur, et ladite pluralité d'encoches annulaires (19) se trouve sur l'une (15) des extrémités dudit embout tubulaire de raccordement (11) qui est munie d'un diamètre réduit.

6. Raccord pour tuyaux flexibles, selon la revendication 5, **caractérisé par le fait qu'**il comprend un profil saillant (18) légèrement tronconique, situé sur la région extrême de ladite pluralité d'encoches annulaires (19).

7. Raccord pour tuyaux flexibles, selon la revendication 1, **caractérisé par le fait que** ladite extrémité (15) dudit embout tubulaire de raccordement (11), qui est munie d'un diamètre réduit, est insérée à force dans ladite extrémité libre dudit tuyau flexible (12).
